# FASCICULE DE BREVET EUROPEEN

(11) **EP 3 769 365 B1**
(45) Date de publication et mention de la délivrance du brevet: **24.07.2024**
(21) Numéro de dépôt: 19720974.5
(22) Date de dépôt: 05.04.2019
(51) Int. Cl.: H01M 10/6556, H01M 10/6569, H01M 10/6551, H01M 10/613

(54) **SYSTÈME DE REFROIDISSEMENT D'AU MOINS UNE BATTERIE DE VÉHICULE AUTOMOBILE**
SYSTEM ZUR KÜHLUNG MINDESTENS EINER KRAFTFAHRZEUGBATTERIE
SYSTEM FOR COOLING AT LEAST ONE MOTOR VEHICLE BATTERY

(30) Priorité: 10.04.2018 FR 1853099
(43) Date de publication de la demande: 27.01.2021
(73) Titulaire: Valeo Systemes Thermiques-THS, 78322 Le Mesnil Saint Denis Cedex (FR)
(72) Inventeur: DROULEZ, Eric, 78322 LE MESNIL SAINT DENIS CEDEX (FR); MAGNIER-CATHENOD, Anne-Sylvie, 78322 LE MESNIL SAINT DENIS CEDEX (FR); MARTINS, Carlos, 78322 LE MESNIL SAINT DENIS CEDEX (FR); CARVALHO, Victor, 78322 LE MESNIL SAINT DENIS CEDEX (FR); CANDIA, Esteban, 78322 LE MESNIL SAINT DENIS CEDEX (FR)
(74) Mandataire: Valeo Systèmes Thermiques
(86) Numéro de dépôt international: PCT/FR2019/050802
(87) Numéro de publication internationale: WO 2019/197759

(56) Documents cités:
- FR-A3- 3 037 727
- US-A1- 2012 003 515
- US-A1- 2017 179 551

## Description

La présente invention concerne un système de refroidissement d'au moins une batterie de véhicule automobile.

L'invention est notamment applicable pour toutes les automobiles électriques ou hybrides avec un pack de batteries et un système de climatisation, et éventuellement une entrée de charge rapide des batteries.

Le brevet US8852772 décrit un système de refroidissement de batterie au lithium-ion, destiné à être utilisé dans un véhicule hybride. Ce système comprend une pluralité de modules de refroidissement liquide autonomes. Chaque module de refroidissement comprend une pluralité de cellules de batterie ayant au moins un canal de fluide formé entre celles-ci. Un fluide diélectrique est disposé dans au moins un canal de fluide. Le fluide diélectrique est en contact avec l'ensemble de la batterie pour chauffer et/ou refroidir l'ensemble de la batterie. Un élément chauffant peut être disposé dans l'espace intérieur et chauffe le fluide diélectrique. Un élément de refroidissement est disposé dans l'espace intérieur et refroidit le fluide diélectrique.

La demande de brevet FR3037727 et US20170179551 A1 décrivent également un dispositif de refroidissement de batteries.

La présente invention vise à améliorer les systèmes connus.

L'invention a ainsi pour objet un système de refroidissement d'au moins une batterie de véhicule automobile, ce système comportant :
- un compartiment fermé agencé pour recevoir une batterie ou des cellules de batterie,
- un fluide diélectrique présent dans le compartiment de manière à pouvoir refroidir la batterie,
- un dispositif de refroidissement agencé pour refroidir le fluide diélectrique, ce dispositif de refroidissement comportant au moins un canal dans lequel peut circuler un fluide caloporteur distinct du fluide diélectrique, ce dispositif de refroidissement comportant au moins une face inclinée d'échange thermique entre le fluide diélectrique et le fluide caloporteur, cette face étant agencée de manière inclinée par rapport à une direction horizontale lorsque le système est monté sur le véhicule automobile, cette face inclinée étant notamment juste en dessous d'un capot fermant le compartiment.

L'invention préconise d'incliner la face du dispositif de refroidissement, qui est positionnée à l'intérieur du système, au-dessus de la batterie ou des cellules de batterie, qui sont notamment immergées dans le fluide diélectrique.

Ce fluide diélectrique permet avantageusement de refroidir la batterie ou les cellules en s'évaporant lorsque celles-ci chauffent.

Ensuite le gaz rentre en contact avec l'échangeur froid, ou une face inclinée, positionné de préférence au niveau d'un capot de la batterie. Le fluide diélectrique condense sur le ou les faces inclinées froides de l'échangeur, à savoir le dispositif de refroidissement.

L'invention permet de faciliter l'écoulement par gravité des gouttes de fluide diélectrique, le ou les faces étant inclinées.

De plus, cette inclinaison favorise le passage des gaz de chaque côté de l'échangeur. Ainsi, chaque face est efficace.

Par exemple, la ou les faces inclinées font un angle de 15° minimum par rapport à la base de la batterie ou des cellules.

Selon un exemple de réalisation de l'invention, le compartiment qui reçoit la batterie ou les cellules de batterie comporte au moins une paroi latérale et la face d'échange thermique forme avec cette paroi latérale un angle différent de 90°.

Selon un exemple de réalisation de l'invention, le compartiment qui reçoit la batterie ou les cellules de batterie comporte au moins un fond et la face d'échange thermique forme avec ce fond un angle différent de 0°, notamment un angle compris entre 5° et 45°, notamment un angle sensiblement égal à 15°.

Selon un exemple de réalisation de l'invention, le fond et la paroi latérale sont sensiblement perpendiculaires.

Selon un exemple de réalisation de l'invention, le dispositif de refroidissement comporte une pluralité de faces inclinées distinctes et de préférences parallèles entre elles.

Selon un exemple de réalisation de l'invention, ces faces inclinées ont leurs centres alignés sur un même axe.

Selon un exemple de réalisation de l'invention, un espace libre est présent entre ces faces inclinées.

Ainsi les faces inclinées ne sont pas jointives afin de faciliter l'écoulement des condensats. De plus, l'espace libre entre la face froide et la batterie pourra être mis à profit pour le refroidissement de composants électroniques.

Selon un exemple de réalisation de l'invention, les faces inclinées sont de mêmes dimensions et/ou formes.

Selon un exemple de réalisation de l'invention, la distance séparant ces faces peut être variable, ceci pour assurer l'homogénéité du refroidissement et limiter des écarts de températures entre les cellules.

Selon un exemple de réalisation de l'invention, les faces inclinées sont définies sur des faisceaux de tubes dans lesquels circule le fluide caloporteur.

Selon un exemple de réalisation de l'invention, au moins certains tubes de chaque faisceau ont une section transversale rectangulaire.

Selon un exemple de réalisation de l'invention, les tubes forment une seule rangée.

Selon un exemple de réalisation de l'invention, les faces inclinées sont au nombre de 2 au moins, voire 5 au moins, voire 10 au moins.

Selon un exemple de réalisation de l'invention, les faisceaux de tubes sont reliés à des collecteurs communs distribuant le fluide caloporteur dans les faisceaux de tubes.

Selon un exemple de réalisation de l'invention, les faces inclinées s'étendent entre les deux collecteurs.

Selon un exemple de réalisation de l'invention, les faces sont disposées au dessus des cellules de batterie de sorte que du liquide condensé sur la face inclinée puisse tomber par gravité sur les cellules de batterie.

Selon un exemple de réalisation de l'invention, les faces inclinées s'étendent tout le long de la longueur des tubes d'écoulement de fluide caloporteur.

Selon un exemple de réalisation de l'invention, la ou les faces inclinées sont planes.

Selon un exemple de réalisation de l'invention, une paroi de guidage de liquide est prévue pour se raccorder à la face inclinée de manière à guider du liquide condensé sur la face inclinée vers les cellules de batterie.

Selon un exemple de réalisation de l'invention, cette paroi de guidage s'étend sensiblement verticalement.

Ceci permet de favoriser l'écoulement dans des zones de refroidissement à privilégier telles que les connectiques.

Selon un exemple de réalisation de l'invention, la paroi de guidage est présente sur certaines seulement des faces inclinées.

Selon un exemple de réalisation de l'invention, le dispositif de refroidissement comporte une pluralité de faces inclinées distinctes et chaque face inclinée est associée à un seul canal de fluide caloporteur.

Selon un exemple de réalisation de l'invention, le canal présente une section transversal sensiblement rectangulaire et ayant une forme sensiblement cylindrique aux extrémités, au raccord au collecteur ou boite collectrice.

Selon un exemple de réalisation de l'invention, la ou les faces inclinées comportent des saillies.

Selon un exemple de réalisation de l'invention, les faces inclinées sont toutes parallèles.

Selon un exemple de réalisation de l'invention, les faces inclinées sont arrangées en deux groupes, chaque groupe étant défini par une inclinaison différente de celle de l'autre groupe. L'inclinaison est de préférence identique pour toutes les faces d'un même groupe.

Selon un exemple de réalisation de l'invention, les inclinaisons entre les deux groupes forment un angle compris entre 180° et 90°, notamment entre 180° et 100°.

Selon un exemple de réalisation de l'invention, le dispositif de refroidissement comporte au moins une face inclinée, au contact thermique d'n circuit de fluide caloporteur, ce circuit pouvant présente au moins un virage, notamment au moins deux virages.

Selon un exemple de réalisation de l'invention, cette face inclinée est formée sur une plaque qui définit le circuit.

Selon un exemple de réalisation de l'invention, la plaque comporte une entrée et une sortie de fluide caloporteur, notamment sur une face de la plaque, de dessus ou de dessous.

Selon un exemple de réalisation de l'invention, le ou les entrées des plaques froides se situent préférentiellement sensiblement au centre de la batterie ou des cellules, car ceux-ci bénéficient moins du refroidissement extérieur.

Ainsi les sorties de fluide caloporteur peuvent être plus éloignées du centre des cellules que les entrées de fluide caloporteur.

Selon un exemple de réalisation de l'invention, la plaque comporte deux parois, notamment embouties, et assemblées entre elles.

Selon un exemple de réalisation de l'invention, le dispositif de refroidissement comporte deux telles plaques avec un circuit de fluide qui notamment serpente, et ces plaques sont dirigées inclinées vers les cellules lorsque que l'on se rapproche de l'autre plaque.

En variante, le dispositif de refroidissement comporte deux telles plaques avec un circuit de fluide qui notamment serpente, et ces plaques sont dirigées inclinées à l'opposé des cellules lorsque que l'on se rapproche de l'autre plaque.

Selon un exemple de réalisation de l'invention, les plaques sont distantes l'une de l'autre, et notamment symétrique l'une de l'autre par rapport à un plan de symétrie.

Selon un exemple de réalisation de l'invention, l'une des plaques s'étend au dessus de plusieurs cellules de batterie, notamment de la moitié des cellules de batterie dans le compartiment.

Le nombre de passes dans le circuit fluide froid de chaque plaque ainsi que la largeur de celle-ci seront adaptés en fonction de la morphologie de la batterie ou ces cellules et de l'encombrement dû à l'inclinaison de le ou des faces de refroidissement.

Selon un exemple de réalisation de l'invention, la plaque est sensiblement rectangulaire.

Selon un exemple de réalisation de l'invention, la ou les faces inclinées peuvent présenter des corrugations pour augmenter l'échange ou bien des ailettes verticales.

Selon un exemple de réalisation de l'invention, le refroidissement peut aussi s'effectuer via un serpentin muni d'ailettes avantageusement inclinées à 15° minimum.

Selon un aspect de l'invention, le système de refroidissement comporte :
- un compartiment fermé agencé pour recevoir une batterie ou des cellules de batteries,
- un fluide diélectrique présent dans le compartiment de manière à pouvoir refroidir la batterie ou les cellules de batterie,
- un dispositif de refroidissement agencé pour refroidir le fluide diélectrique, ce dispositif de refroidissement comportant au moins un canal dans lequel peut circuler un fluide caloporteur distinct du fluide diélectrique, ce dispositif de refroidissement étant agencé de manière à permettre un refroidissement du réfrigérant, au choix en fonction de paramètres, par de l'air ambiant, notamment avec un radiateur, ou par échange thermique avec un ensemble de climatisation, ou encore appelé ensemble d'air conditionné, du véhicule automobile.

De préférence, les cellules de batterie sont immergées dans le fluide diélectrique.

Le refroidissement du fluide diélectrique peut être une condensation du fluide passé en phase vapeur.

Selon un aspect de l'invention, le dispositif de refroidissement est connecté à une boucle basse température qui comprend un échangeur de chaleur, notamment un radiateur, dans lequel peut circuler ce réfrigérant, le radiateur étant au contact de l'air ambiant.

Avantageusement le radiateur est disposé sur une face avant du véhicule.

Selon un aspect de l'invention, la boucle basse température ne comporte pas de composant à refroidir en amont du système de refroidissement de la batterie.

Selon un aspect de l'invention, le dispositif de refroidissement est connecté à un échangeur de chaleur, notamment un refroidisseur ou chiller, qui est relié à l'ensemble de climatisation de sorte que le fluide caloporteur puisse être refroidi par échange thermique avec le fluide caloporteur de l'ensemble de climatisation.

Selon un aspect de l'invention, le fluide caloporteur est un liquide, notamment une eau glycolée.

Ainsi les échanges thermiques peuvent être efficaces, notamment par rapport à de l'air soufflé.

Selon un aspect de l'invention, le compartiment du pack batterie est essentiellement rempli de fluide diélectrique, en phase liquide ou gazeuse, sans présence substantielle d'air. Les échanges thermiques sont assurés principalement par le fluide diélectrique.

Selon un aspect de l'invention, le dispositif de refroidissement et le compartiment forment un module intégré, à savoir un ensemble manipulable comme un tout, ou dit autrement le dispositif de refroidissement et le compartiment ne sont pas déportés l'un de l'autre. Ainsi les échanges thermiques entre le dispositif de refroidissement et le compartiment peuvent être efficaces et la mise en oeuvre peut être relativement simple. On peut ainsi éviter des conduits supplémentaires entre le dispositif de refroidissement et le compartiment qui est destiné à recevoir la ou les batteries, ou les cellules de batterie.

Selon un aspect de l'invention, le fluide diélectrique est en contact avec le ou les batteries, ou les cellules de batterie.

Selon un aspect de l'invention, le fluide diélectrique est agencé dans le compartiment à une pression négative aux températures usuelles (environ 30°) et, en opération de la batterie, la pression est de l'ordre de 0.5 bar à 20°C.

Selon un aspect de l'invention, le compartiment ne reçoit aucun dispositif de refroidissement électrique logé en son sein. Le refroidissement du fluide diélectrique est assuré par les échanges thermiques avec le fluide caloporteur circulant dans le dispositif de refroidissement, sans faire appel à un éventuel dispositif de refroidissement électrique logé dans le compartiment, ce type de dispositif pourrait alors générer une surconsommation électrique.

Selon un aspect de l'invention, le fluide diélectrique est maintenu, lors du fonctionnement du véhicule, à une température comprise entre 20 et 35°, notamment d'environ 30°. Ceci est un compromis satisfaisant entre le potentiel de refroidissement à l'air ambiant et les contraintes thermiques imposées par la ou les batteries, ou les cellules.

Selon un aspect de l'invention, le fluide diélectrique est un fluide capable de changer de phase lors du fonctionnement, notamment le fluide présente un point d'ébullition à 30° dans les conditions de pression dans le compartiment, notamment à 0.5 bar.

Selon un aspect de l'invention, le dispositif de refroidissement comporte un condenseur au contact duquel du fluide diélectrique, en phase gazeuse, peut se condenser.

Selon un aspect de l'invention, le condenseur comporte une plaque froide au contact de laquelle du fluide diélectrique, en phase gazeuse, peut se condenser.

Selon un aspect de l'invention, le canal dans lequel peut circuler le fluide caloporteur est formé sur le condenseur de manière à refroidir celui-ci. La température du réfrigérant, lorsqu'il passe dans le condenseur, est de préférence inférieure à 30°.

Selon un aspect de l'invention, le système est agencé pour provoquer la circulation de soit dans le radiateur en contact avec l'air ambiant soit dans le refroidisseur connecté à l'ensemble de climatisation du véhicule en fonction de l'un au moins des paramètres suivants : la température extérieure, la température de la ou des batteries, de l'état du véhicule représenté par exemple par la vitesse du véhicule, la puissance de charge de la batterie.

Compte tenu du contact direct avec la batterie, ou les cellules de batterie, et de la température d'environ 30° à laquelle est maintenu le fluide diélectrique, le fluide traversant le dispositif de refroidissement peut être prévu à des températures plus élevées que dans un système classique (environ 15-20°C) par exemple un système de type plaques froides qui présente plus de résistance thermique. On peut donc refroidir avec du liquide lui-même refroidi par de l'air jusqu'à des températures proches de 25-30°C. Ceci permet d'éviter un usage fréquent de l'ensemble de climatisation qui consomme de l'énergie.

L'invention sera mieux comprise et d'autres détails, caractéristiques et avantages de l'invention apparaîtront à la lecture de la description suivante faite à titre d'exemples non limitatifs en référence au dessin annexé dans lequel :
- la figure 1 illustre, schématiquement et partiellement, un système de refroidissement selon l'un exemple de l'invention et son environnement,
- la figure 2 illustre, schématiquement et partiellement, le système de refroidissement de la figure 1,
- la figure 3 illustre des étapes du procédé de gestion thermique, selon un exemple,
- les figures 4 à 11 illustrent, schématiquement et partiellement, le système de refroidissement selon d'autres modes de réalisation de l'invention.

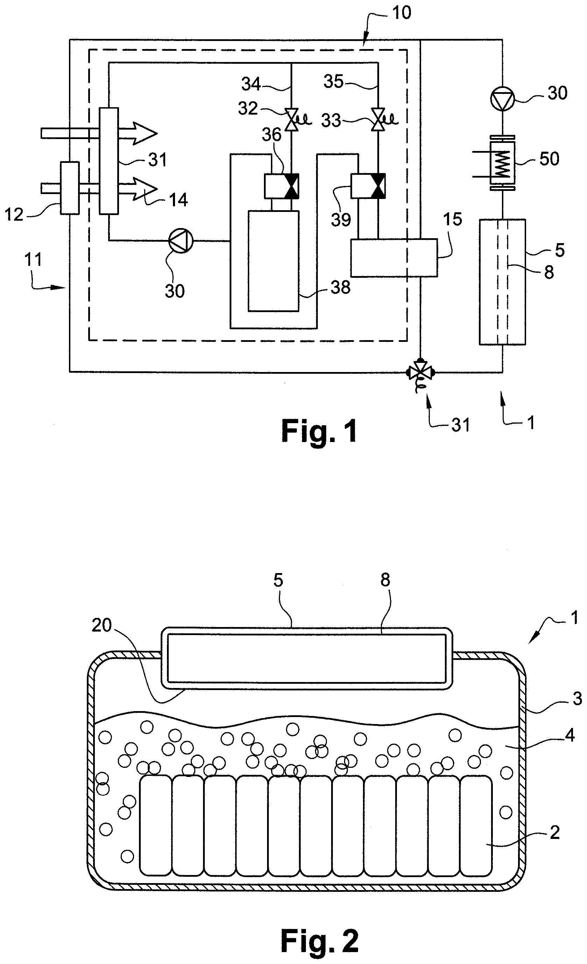

On a représenté, à titre d'exemple, sur les figures 1 et 2 un système de refroidissement 1 d'un pack batterie 2 de véhicule automobile, ce système comportant :
- un compartiment fermé 3 agencé pour recevoir les cellules de batterie 2,
- un fluide diélectrique 4 présent dans le compartiment 3 de manière à pouvoir refroidir les cellules de batterie,
- un dispositif de refroidissement 5 agencé pour refroidir le fluide diélectrique 3, ce dispositif de refroidissement 5 comportant un canal 8 dans lequel peut circuler un fluide caloporteur distinct du fluide diélectrique 4, ce dispositif de refroidissement 5 étant agencé de manière à permettre un refroidissement du réfrigérant, au choix en fonction de paramètres, par de l'air ambiant ou par échange thermique avec un ensemble de climatisation 10, ou encore appelé ensemble d'air conditionné, du véhicule automobile.

L'ensemble de climatisation 10 peut comporter, de manière connue, un évaporateur, un condenseur, un compresseur, un détendeur et des vannes (non représentés).

Le fluide caloporteur utilisé dans l'ensemble de climatisation 10 peut être choisi parmi les fluides d'appellation 134a, 1234yf, ou CO2.

Les cellules de batterie 2 comprennent par exemple une pluralité de batteries au lithium-ion (Li-ion) pour une utilisation dans un véhicule hybride. Dans un autre mode de réalisation, la pluralité de cellules de batterie sont des batteries Li-ion pour une utilisation dans un véhicule électrique à batterie.

Les cellules de la batterie 2 peuvent être empilées.

Les cellules de batterie 2 sont complètement immergées dans le fluide diélectrique 4.

Le dispositif de refroidissement 5 est connecté à une boucle basse température 11 qui comprend un échangeur de chaleur, ici un radiateur 12, dans lequel peut circuler le réfrigérant, le radiateur étant au contact de l'air ambiant.

Le radiateur 12 est disposé sur une face avant du véhicule de manière à pouvoir être refroidi par l'air extérieur 14 qui circule à son contact.

Par ailleurs, le dispositif de refroidissement 5 est connecté à un échangeur de chaleur, ici un refroidisseur 15 ou chiller, qui est placé dans l'ensemble de climatisation 10 de sorte que le fluide caloporteur puisse être refroidi par échange thermique avec le radiateur de l'ensemble de climatisation 10.

Le fluide caloporteur est une eau glycolée.

Le compartiment 3 peut être formé pour générer une circulation verticale de fluide diélectrique entre les cellules du pack.

Selon un aspect de l'invention, le dispositif de refroidissement 5 et le compartiment 3 forment un module intégré, à savoir un ensemble manipulable comme un tout, ou dit autrement le dispositif de refroidissement et le compartiment ne sont pas déportés l'un de l'autre. Ainsi les échanges thermiques entre le dispositif de refroidissement et le compartiment peuvent être efficaces et la mise en oeuvre peut être relativement simple.

Le fluide caloporteur pourrait être de différents types.

Le dispositif de refroidissement 5 comporte un condenseur 20 au contact duquel du fluide diélectrique 4, en phase gazeuse, peut se condenser. Le condenseur 20 comporte une plaque froide, ou plusieurs surfaces, au contact de laquelle ou desquelles du fluide diélectrique, en phase gazeuse, peut se condenser.

Le système 1 est agencé pour provoquer la circulation de fluide caloporteur soit dans le radiateur 12 en contact avec l'air ambiant soit dans le refroidisseur 15 connecté à l'ensemble de climatisation 10 du véhicule en fonction de l'un au moins des paramètres suivants : la température extérieure, la température de la ou des batteries, de l'état du véhicule représenté par exemple par la vitesse du véhicule.

Une pompe 30 est prévue en aval du dispositif de refroidissement 5 pour faire circuler le fluide caloporteur dans ce dispositif 5.

Une vanne 3 voies 31 est prévue en aval du dispositif de refroidissement 5 pour envoyer le réfrigérant, selon le fonctionnement, soit vers le refroidisseur 15 (ou chiller) soit dans la boucle basse température 11 (avec un radiateur basse température).

L'ensemble de climatisation 10 comporte :
- un compresseur 30 pour comprimer le réfrigérant,
- un condenseur 31 en aval du compresseur 30 et placé sur le chemin d'air 14 de préférence derrière le radiateur 12,
- deux vannes 32 et 33 sur deux branches parallèles 34 et 35 qui sont en aval du condenseur 31.

La branche 34 débouche sur un détendeur 36 disposé en amont d'un évaporateur 38.

L'autre branche 35 débouche sur un autre détendeur 39 qui est disposé en amont du refroidisseur 15.

Les deux détendeurs 36 et 39 sont connectés au compresseur 30.

Un élément de chauffage additionnel du fluide caloporteur 50 est prévu entre le compresseur 30 et le chiller 5, qui peut être un chauffage électrique ou un échangeur de chaleur de type condenseur à eau par exemple.

Lors du roulage ou de la charge électrique du véhicule, le système 1 permet de refroidir le réfrigérant, selon un mode de refroidissement :
- par de l'air ambiant en utilisant la boucle basse température 11 et ainsi le radiateur 12 si la température ambiante Tamb est inférieure à 30° (étape 20),

- par échange thermique avec l'ensemble de climatisation 10 du véhicule automobile si la température ambiante Tamb est supérieure à 30° environ (étape 21). Dans ce cas, l'ensemble de climatisation 10 est en marche.

Il est possible de prévoir qu'un ventilateur de la voiture permet le passage d'air sans roulage.

Dans le cas d'un démarrage à froid, lorsque la température ambiante est très basse, principalement en hiver, la batterie sera normalement à basse température aussi.

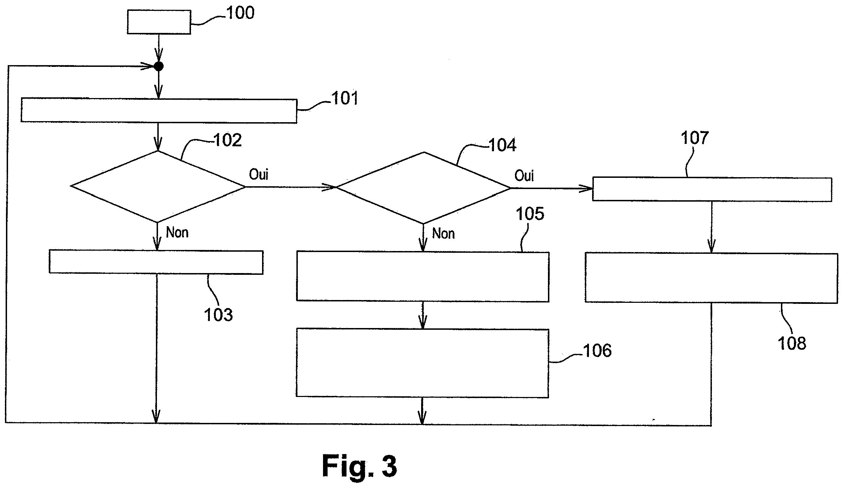

A titre d'exemple, lors d'une charge rapide ou ultra-rapide de batteries, comme illustré sur la figure 3, l'invention met en oeuvre les étapes suivantes, notamment pour maintenir la température de batterie en dessous de 30°.

### Etape 100 : Début

Etape 101 : Acquisition de données de température extérieure et température des cellules de batterie
Etape 102 : Détermination si la température des cellules est supérieure à une température cible Tcible
Etape 103 : si la température des cellules n'est pas supérieure à Tcible, pas de besoin de refroidissement
Etape 104 : si la température des cellules est supérieure à Tcible, détermination si la température extérieure est supérieure à une température cible Tseuil
Etape 105 : si la température extérieure n'est pas supérieure à Tseuil, évacuation des calories dans le radiateur basse température 12
Etape 106 : la vanne liquide est orientée vers le radiateur basse température 12 et la vanne réfrigérant 33 vers le refroidisseur 15 est en position fermée
Etape 107 : si la température extérieure est supérieure à Tseuil, évacuation des calories dans le refroidisseur 15
Etape 108 : la vanne liquide est orientée vers le refroidisseur 15 et la vanne réfrigérant 33 vers le refroidisseur 15 est en position ouverte.

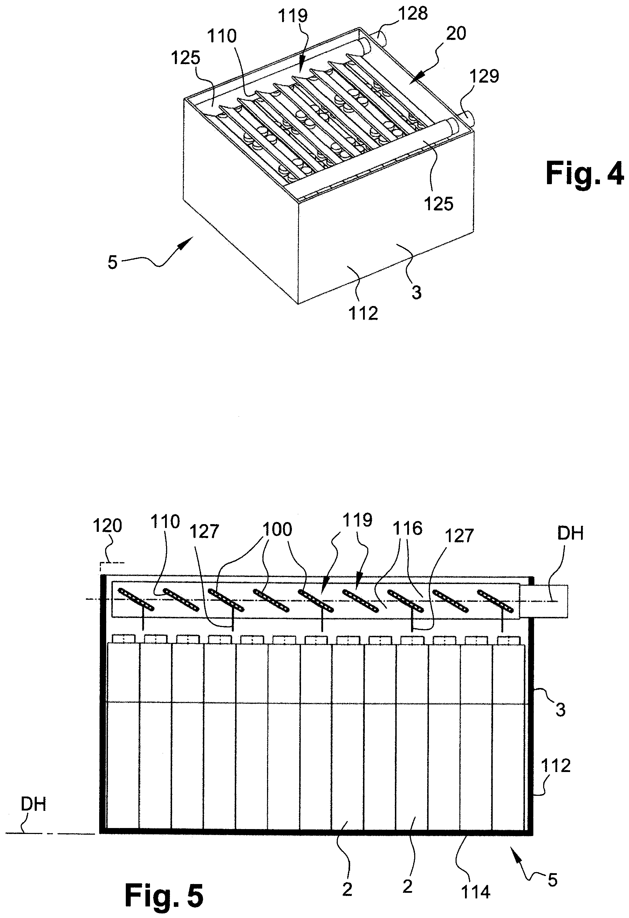

Comme illustré sur les figures 4 et 5, le dispositif de refroidissement 5, en particulier le condenseur 20, comporte des canaux 100 dans lesquels peut circuler le fluide caloporteur distinct du fluide diélectrique.

Le condenseur 20 comporte des faces 110 inclinées d'échange thermique entre le fluide diélectrique et le fluide caloporteur.

Ces faces 110 sont agencées de manière inclinée par rapport à une direction horizontale DH lorsque le système est monté sur le véhicule automobile.

Ces faces inclinées sont en dessous d'un capot 120 fermant le compartiment 3.

Le compartiment 3, par exemple formé par un boitier, qui reçoit la batterie ou les cellules de batterie 2 comporte des parois latérales 112 et chaque face 110 d'échange thermique forme avec cette paroi latérale 112 un angle A différent de 90° ou, dit autrement, forme avec la direction horizontale DH un angle différent de zéro degré. notamment un angle compris entre 5° et 45°, notamment un angle sensiblement égal à 15°.

Le fond 114 du compartiment et la paroi latérale 112 sont sensiblement perpendiculaires.

Il est prévu une pluralité de faces inclinées 110 distinctes et de parallèles entre elles.

Ces faces inclinées 110 ont leurs centres alignés sur un même axe parallèle à DH.

Un espace libre 116 est présent entre ces faces inclinées.

Ainsi les faces inclinées ne sont pas jointives afin de faciliter l'écoulement des condensats. De plus, l'espace libre entre la face froide et la batterie pourra être mis à profit pour le refroidissement de composants électroniques.

Les faces inclinées 110 sont identiques.

Les faces inclinées 110 sont définies sur des faisceaux de tubes 119 dans lesquels circule le fluide caloporteur, qui ensemble forment le condenseur.

Les tubes 100 de chaque faisceau ont une section transversale rectangulaire.

Les faces inclinées 110 sont au nombre de 2 au moins, voire 5 au moins, voire 10 au moins.

Comme visible sur les figures 5, les faisceaux 110 de tubes sont reliés à des collecteurs communs 125 distribuant, l'un pour l'entrée 128 et l'autre pour la sortie 129 de fluide, le fluide caloporteur dans les faisceaux de tubes.

Les faces inclinées 110 s'étendent entre les deux collecteurs 125, perpendiculairement.

Les faces 110 sont disposées au dessus des cellules de batterie2 de sorte que du liquide condensé sur la face inclinée puisse tomber par gravité sur les cellules de batterie.

Les faces inclinées 110 sont planes.

Des parois de guidage 127 de liquide sont prévues pour se raccorder à l'une des faces inclinées 110 de manière à guider du liquide condensé sur la face inclinée vers les cellules de batterie 2.

Chaque paroi de guidage 127 s'étend sensiblement verticalement.

Une paroi de guidage 127 est présente sur certaines seulement des faces inclinées 110.

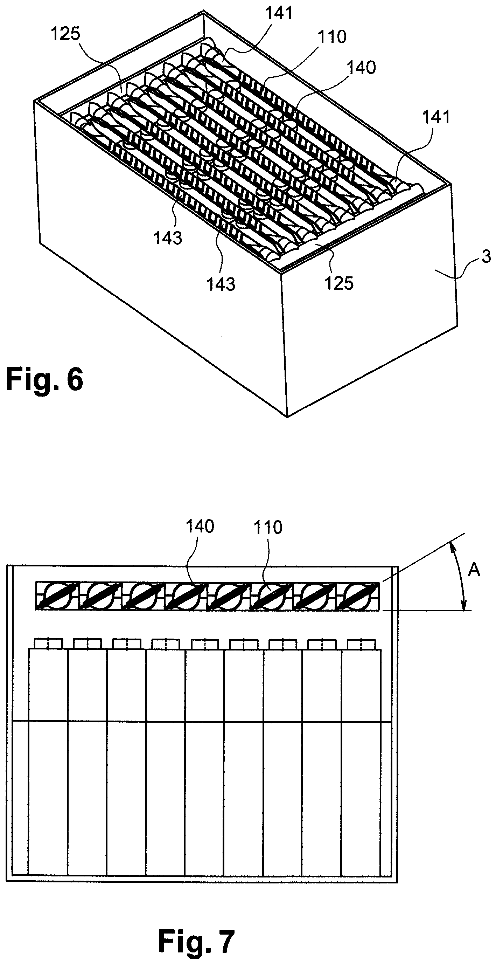

Dans une variante illustrée aux figures 6 et 7, le condenseur 20 comporte une pluralité de faces inclinées 110 distinctes et chaque face inclinée est associée à un seul canal 140 de fluide caloporteur.

Le condenseur 20 est par exemple formé par le brasage de deux plaques embouties (une inférieure et une supérieure), ce qui est un mode différent que d'avoir une série de canaux brasés sur les deux tubes (ou boite d'entrée et de sortie).

Le canal 140 présente une section transversal sensiblement rectangulaire et ayant une forme sensiblement cylindrique aux extrémités 141, au raccord au collecteur ou boite collectrice 125.

Les faces inclinées 110 comportent des saillies 143 ou corrugations.

Les faces inclinées 110 sont toutes parallèles.

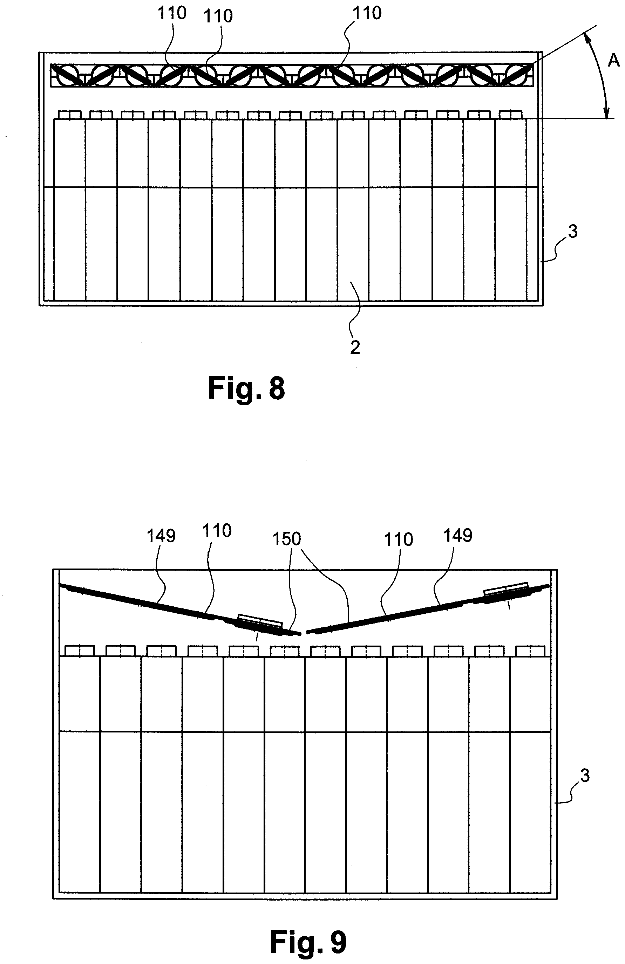

En variante, comme illustré sur la figure 8, les faces inclinées 110 sont arrangées en deux groupes, chaque groupe étant défini par une inclinaison différente de celle de l'autre groupe. L'inclinaison est de préférence identique pour toutes les faces d'un même groupe.

Selon un exemple de réalisation de l'invention, les inclinaisons entre les deux groupes forment un angle compris entre 180° et 90°, notamment entre 180° et 100°.

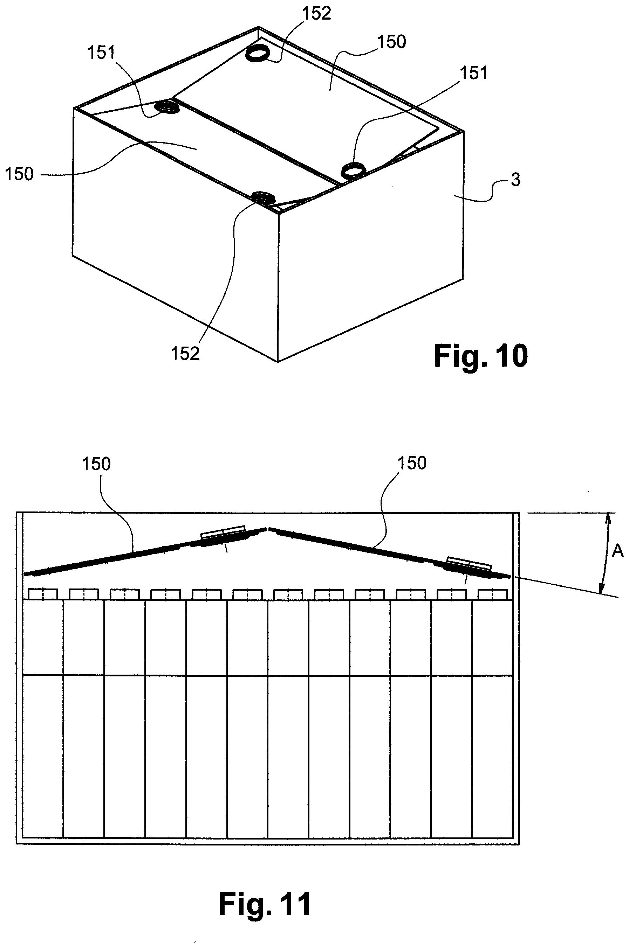

On a représenté sur les figures 9 et 10 un autre exemple de l'invention, dans le condenseur comporte des faces inclinées, au contact thermique d'un circuit de fluide caloporteur, ce circuit 149 pouvant présente une forme en serpentin.

Ces faces inclinées 110 sont formées sur une plaque 150 qui définit le circuit 149.

Chaque plaque 150 comporte une entrée 151 et une sortie 152 de fluide caloporteur, notamment sur une face de la plaque, de dessus ou de dessous.

Selon un exemple de réalisation de l'invention, le ou les entrées 151 des plaques froides se situent préférentiellement au centre de la batterie ou des cellules, car ceux-ci bénéficient moins du refroidissement extérieur.

Selon un exemple de réalisation de l'invention, la plaque 150 comporte deux parois, notamment embouties, et assemblées entre elles.

Il est prévu deux telles plaques 150 avec un circuit de fluide qui notamment serpente, et ces plaques sont dirigées inclinées vers les cellules lorsque que l'on se rapproche de l'autre plaque.

Les plaques 150 définissent une forme en V.

En variante, comme illustré sur la figure 11, le dispositif de refroidissement comporte deux telles plaques 150 avec un circuit de fluide qui notamment serpente, et ces plaques sont dirigées inclinées à l'opposé des cellules lorsque que l'on se rapproche de l'autre plaque.

Les plaques 150 sont distantes l'une de l'autre, et notamment symétrique l'une de l'autre par rapport à un plan de symétrie.

Dans d'autres exemples de réalisation, il est possible de prévoir une série de tubes extrudés brasés sur des boites ou deux plaques embouties avec les formes des multiples canaux intégrés. Les formes sont par exemple verticales qui facilitent le retour du fluide dans des zones critiques.

## Revendications

1. Système de refroidissement (1) d'au moins une batterie (2) de véhicule automobile, ce système comportant :
- un compartiment fermé (3) agencé pour recevoir une batterie ou des cellules de batterie(2),
- un fluide diélectrique (4) présent dans le compartiment de manière à pouvoir refroidir la batterie,
- un dispositif de refroidissement (5) agencé pour refroidir le fluide diélectrique, ce dispositif de refroidissement comportant au moins un canal dans lequel peut circuler un fluide caloporteur distinct du fluide diélectrique, ce dispositif de refroidissement comportant au moins face inclinée d'échange thermique entre le fluide diélectrique et le fluide caloporteur, cette face (110) étant agencée de manière inclinée par rapport à une direction horizontale lorsque le système est monté sur le véhicule automobile.

2. Système selon la revendication précédente, dans lequel le compartiment qui reçoit la batterie ou les cellules de batterie comporte au moins une paroi latérale et la face d'échange thermique forme avec cette paroi latérale un angle différent de 90°.

3. Système selon la revendication 1 ou 2, dans lequel le compartiment qui reçoit la batterie ou les cellules de batterie comporte au moins un fond et la face d'échange thermique forme avec ce fond un angle différent de 0°, notamment un angle compris entre 5° et 45°, notamment un angle sensiblement égal à 15°.

4. Système selon l'une des revendications précédentes, dans lequel le dispositif de refroidissement (5) comporte une pluralité de faces (110) inclinées distinctes et de préférences parallèles entre elles.

5. Système selon la revendication précédente, dans lequel un espace libre (116) est présent entre ces faces inclinées.

6. Système selon l'une des revendications précédentes, dans lequel les faces sont disposées au dessus des cellules de batterie de sorte que du liquide condensé sur la face inclinée puisse tomber par gravité sur les cellules de batterie.

7. Système selon l'une des revendications précédentes, dans lequel les faces inclinées sont arrangées en deux groupes, chaque groupe étant défini par une inclinaison différente de celle de l'autre groupe.

8. Système selon l'une des revendications précédentes, dans lequel la face inclinée est formée sur une plaque (150) qui définit un circuit de fluide caloporteur.

9. Système selon la revendication précédente, dans lequel les plaques sont distantes l'une de l'autre, et notamment symétrique l'une de l'autre par rapport à un plan de symétrie.

10. Système selon l'une des revendications 8 et 9, dans lequel le ou les entrées des plaques froides se situent préférentiellement sensiblement au centre de la batterie ou des cellules.

## Patentansprüche

1. System zur Kühlung (1) wenigstens einer Kraftfahrzeugbatterie (2), wobei dieses System Folgendes beinhaltet:
- ein geschlossenes Fach (3), das dafür angeordnet ist, eine Batterie oder Batteriezellen (2) aufzunehmen,
- ein dielektrisches Fluid (4), das in dem Fach vorhanden ist, um die Batterie kühlen zu können,
- eine Kühlvorrichtung (5), die dafür angeordnet ist, das dielektrische Fluid zu kühlen, wobei diese Kühlvorrichtung wenigstens einen Kanal beinhaltet, in dem ein Wärmeübertragungsfluid strömen kann, das sich von dem dielektrischen Fluid unterscheidet, wobei diese Kühlvorrichtung wenigstens eine geneigte Fläche zum Wärmeaustausch zwischen dem dielektrischen Fluid und dem Wärmeübertragungsfluid beinhaltet, wobei diese Fläche (110) im Verhältnis zu einer horizontalen Richtung geneigt angeordnet ist, wenn das System am Kraftfahrzeug angebracht ist.

2. System nach dem vorhergehenden Anspruch, wobei das Fach, das die Batterie oder die Batteriezellen aufnimmt, wenigstens eine Seitenwand beinhaltet und die Wärmeaustauschfläche mit dieser Seitenwand einen Winkel bildet, der nicht 90° beträgt.

3. System nach Anspruch 1 oder 2, wobei das Fach, das die Batterie oder die Batteriezellen aufnimmt, wenigstens einen Boden beinhaltet und die Wärmeaustauschfläche mit diesem Boden einen Winkel bildet, der nicht 0° beträgt, insbesondere einen Winkel zwischen 5° und 45°, insbesondere einen Winkel, der im Wesentlichen gleich 15° ist.

4. System nach einem der vorhergehenden Ansprüche, wobei die Kühlvorrichtung (5) eine Mehrzahl von gesonderten und vorzugsweise zueinander parallelen geneigten Flächen (110) beinhaltet.

5. System nach dem vorhergehenden Anspruch, wobei ein freier Raum (116) zwischen diesen geneigten Flächen vorhanden ist.

6. System nach einem der vorhergehenden Ansprüche, wobei die Flächen über den Batteriezellen angeordnet sind, so dass Flüssigkeit, die auf der geneigten Fläche kondensiert ist, durch die Schwerkraft auf die Batteriezellen fallen kann.

7. System nach einem der vorhergehenden Ansprüche, wobei die geneigten Flächen in zwei Gruppen angeordnet sind, wobei jede Gruppe durch eine Neigung definiert ist, die sich von jener der anderen Gruppe unterscheidet.

8. System nach einem der vorhergehenden Ansprüche, wobei die geneigte Fläche auf einer Platte (150) gebildet ist, die einen Wärmeübertragungsfluidkreis definiert.

9. System nach dem vorhergehenden Anspruch, wobei die Platten voneinander beabstandet und insbesondere bezogen auf eine Symmetrieebene zueinander symmetrisch sind.

10. System nach einem der Ansprüche 8 und 9, wobei sich der oder die Eingänge der kalten Platten vorzugsweise im Wesentlichen im Mittelpunkt der Batterie oder der Zellen befinden.

## Claims

1. System (1) for cooling at least one motor vehicle battery (2), this system including:
- a closed compartment (3) arranged to receive a battery or battery cells (2),
- a dielectric fluid (4) present in the compartment so that it is able to cool the battery,
- a cooling device (5) arranged to cool the dielectric fluid, this cooling device including at least one channel in which a heat transfer fluid separate from the dielectric fluid can circulate, this cooling device including at least one inclined face for heat exchange between the dielectric fluid and the heat transfer fluid, this face (110) being arranged inclined relative to a horizontal direction when the system is mounted on the motor vehicle.

2. System according to the preceding claim, in which the compartment that receives the battery or battery cells includes at least one side wall and the heat exchange face forms an angle other than 90° with this side wall.

3. System according to Claim 1 or 2, in which the compartment that receives the battery or battery cells includes at least a bottom and the heat exchange face forms an angle other than 0° with this bottom, in particular an angle of between 5° and 45°, in particular an angle substantially equal to 15°.

4. System according to one of the preceding claims, in which the cooling device (5) includes a plurality of separate inclined faces (110) that are preferably parallel to each other.

5. System according to the preceding claim, in which there is a free space (116) between these inclined faces.

6. System according to one of the preceding claims, in which the faces are arranged above the battery cells so that condensed liquid on the inclined face can fall by gravity onto the battery cells.

7. System according to one of the preceding claims, in which the inclined faces are arranged in two groups, each group being defined by a different inclination from the other group.

8. System according to one of the preceding claims, in which the inclined face is formed on a plate (150) that defines a heat transfer fluid circuit.

9. System according to the preceding claim, in which the plates are spaced apart from each other, and in particular symmetrical relative to a plane of symmetry.

10. System according to one of Claims 8 and 9, in which the inlet or inlets of the cold plates are preferably situated substantially in the centre of the battery or the cells.
